# DEMANDE DE BREVET EUROPEEN

(11) **EP 0 714 863 A1**
(43) Date de publication de la demande: **05.06.1996**
(21) Numéro de dépôt: 94500156.8
(22) Date de dépôt: 15.09.1994
(51) Int. Cl.: C03C 17/00, B60J 3/02

(54) **Procédé de fabrication de verres antiaveuglants et système de fixation de ceux-ci**

(71) Demandeur: Martin Gutierrez, Antonio, E-28002 Madrid (ES)
(72) Inventeur: Martin Gutierrez, Antonio, E-28002 Madrid (ES)
(74) Mandataire: Perez Bonal, Bernardo

(57) **Abrégé**

Procédé de fabrication de verres antiaveuglants et système de fixation de ceux-ci, constitué par une préparation préalable de deux ou de plusieurs pièces de verre ou vitres planes transparentes, lesquelles reçoivent, sur une de leurs faces ou sur toutes deux, une couche de solution formée par de l'oxyde métallique diluée dans de l'huile sérigraphique et soumise postérieurement à des températures oscillant entre 500 et 600 degrés centigrades, avec lesquelles on obtient une vitrification correcte et une couleur jaunâtre totalement transparente. Entre ces pièces, on place une feuille plastique en polyvinyle de butyral transparente que MONSANTO fabrique sous la marque SAFLESUPUB, après quoi on les introduit dans une cloche à vide où, à la température adéquate selon les épaisseurs, on obtient une union complète et totale de tous les éléments avec lesquels on constitue une seule et unique unité qui est fixée au toit des voitures au moyen du système de fixation d'écrans antiaveuglants.

## Description

Procédé de fabrication de verres antiaveuglants avec lequel on évite l'éblouissement provoqué par la lumière solaire ou les feux des véhicules circulant en direction contraire pendant la nuit ou quand on circule en direction du coucher ou du lever du soleil, inconvénients des plus notables que rencontrent les conducteurs de véhicules.

Dans la presque totalité des cas, on a utilisé des pare-soleil abattables situés sur le bord supérieur du pare-brise, lesquels, s'il est vrai qu'ils servent à occulter les rayons du soleil quand on l'a en face, n'ont cependant aucune mission pendant la conduite nocturne, lorsque le soleil est tellement bas que ses rayons passent au-dessous du bord inférieur du pare-soleil dont les dimensions ne peuvent pas être trop grandes car elles entraveraient la vision du conducteur.

Ces inconvénients sont éliminés par l'utilisation de vitres ou de glaces antiaveuglantes qui sont fabriquées à partir de vitres planes transparentes et de glaces également planes et transparentes ayant des épaisseurs variant de 1 mm à 15 mm, leurs dimensions ayant des échelles variables suivant les matériaux à employer et les grandeurs maximales de fabrication, tout cela d'une façon directement proportionnelle aux épaisseurs que l'on veut obtenir.

Une fois que l'on a sélectionné les vitres ou les glaces que l'on va utiliser et après un nettoyage absolu par des procédés mécaniques et manuels, celles-ci reçoivent sur une de leurs faces ou sur toutes deux une couche de solution formée par de l'oxyde métallique dilué dans de l'huile sérigraphique, dont la précipitation peut être réalisée par n'importe lequel des moyens d'application conus, au pistolet, à la brosse par rideau ou par sérigraphie.

A la fin de cette opération, on soumet immédiatement les pièces préparées à un processus de vitrification de la solution appliquée au moyen d'un traitement à haute température, les pièces passant à travers un four électrique qui a atteint une température qui oscille entre 500 et 600 degrés centigrades avec lesquels on obtient la vitrification correcte en même temps qu'une couleur jaune totalement transparente présentant une échelle ascendante d'intensité de couleur.

Au moyen de ce processus, on parvient à atténuer l'éblouissement visuel que peut produire n'importe quelle source lumineuse située devant l'oeil humain ou toute autre sorte de lumière puissante.

Immédiatement après, on place une feuille plastique spéciale en polyvinyle de butyral transparent, fabriquée par MONSANTO sous la marque SAFLESE-PUB, entre deux ou plusieurs pièces qui, soumises préalablement à un nettoyage soigné, sont introduites dans une cloche à vide qui, à la température adéquate suivant les mesures et les épaisseurs, réalise une union complète et totale de tous les éléments mentionnés pour en faire une seule et unique pièce.

Au terme de tout le processus, on est parvenu à obtenir un verre de sécurité parfait, traité de façon adéquate pour atténuer et mitiger les éblouissements produits par toute source émettant de la lumière et susceptible d'aveugler, ne fût-ce qu'un moment, l'être humain.

L'objectif principal pour lequel toutes ces recherches ont été réalisées a été d'obtenir un produit idéal et adéquat protégeant contre d'éventuels éblouissements tous les conducteurs de véhicules à moteur terrestres, maritimes et aériens réalisant n'importe quel voyage ou déplacement.

Tout ceci a eu pour résultat d'obtenir une visière antiaveuglante basée sur un verre de sécurité, transparent parce qu'il est dépourvu d'opacité et qui évite en même temps que l'oeil humain ne soit blessé par aucun rayon lumineux.

Cette visière antiaveuglants est logée sur un châssis en plastique léger ou en tout autre matériau léger, qui est fixé à la partie supérieure du pare-brise des véhicules au moyen d'une pièce de fixation; celle-ci, formée par une bague cylindrique horizontale pourvue des moyens de fixation correspondants, une

Sur ces plans, on présente les illustrations suivantes.

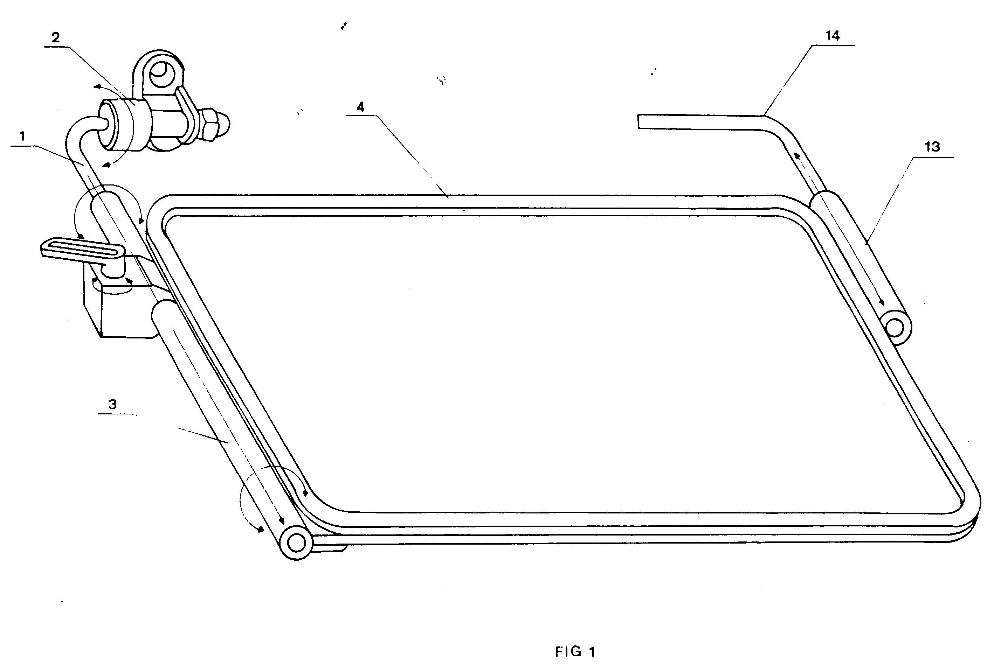

Figure 1 : vue en élévation frontale du système avec les perfectionnements introduits, l'écran étant situé en position perpendiculaire.

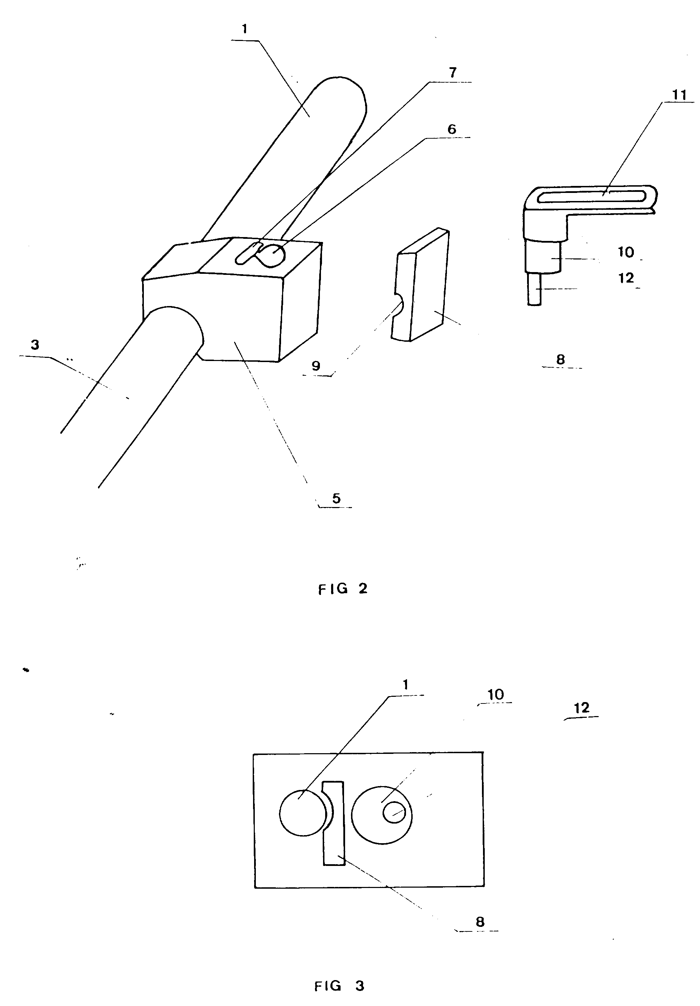

Figure 2 : détail en perspective et éclaté du système d'attache de la tige perpendiculaire de fixation du cadre.

Figure 3 : détail de coupe suivant un plan horizontal coupant la pièce où se trouve logé le système d'attache de la figure 2.

Suivant l'exemple d'exécution représenté, les perfectionnements introduits dans le brevet principal numéro 9301173 par le Système d'attache d'écran antiaveuglant aux toits de véhicules que nous préconisons sont constitués par une tige (1) coudée qui a son bout horizontal introduit dans la bague (2) qui est revendiquée et décrite au brevet principal, alors que son bout le plus long et perpendiculaire s'introduit dans une bague (3) qui longe le cadre (4) sur un de ses côtés. Dans cette bague et en sa zone moyenne supérieure, on a prévu une pièce prismatique (5) pourvue d'un orifice passant destiné à loger la bague (5) dans laquelle on a prévu un orifice passant destiné à loger la bague (3) et un autre orifice à axe perpendiculaire au précédent (6), en contact avec celui-ci, présente tangentiellement un logement à section rectangulaire (7).

Dans le logement à section rectangulaire (7) se trouve logée une pièce prismatique rectangulaire (8) présentant une mortaise en forme de gorge (9) alors que dans l'orifice (6) s'introduit un cylindre excentrique (10) situé sous l'axe d'une poignée d'actionnement (11) et se prolongeant par l'axe de pivotement de cette pièce.

De cette façon, la tige (1) est maintenue en place par la mortaise en gorge (9) de la pièce (9) qui, à son tour, est poussée vers cette tige ou libère celle-ci en fonction de la rotation exercée manuellement sur la poignée d'actionnement (11), ce qui permet, quand celle-ci est libérée, le pivotement de l'écran (4) sur sa bague latérale (3) jusqu'à la position souhaitée, alors que, cette position étant atteinte, si on tourne la poignée (11), le cylindre excentrique (10) pousse sur la pièce (8) et celle-ci fixe la tige (8) et immobilise l'ensemble.

Sur le côté opposé et au sommet supérieur du cadre (4) , on a prévu une autre bague (13) dans laquelle se glisse, avec la possibilité de déplacement vertical une tige (14) coudée en angle droit, pour permettre à l'extrémité libre (15) la possibilité de s'introduire dans le logement prévu pour les écrans pare-soleil existant dans les voitures, afin de fournir un point d'appui secondaire empêchant les vibrations du cadre (4) avec le mouvement du vehicule où il est installé.

La forme, les matériaux et les dimensions pourront être variables et, en général, quand ce sera nécessaire et secondaire, pourvu que le caractère essentiel de l'invention n'en soit pas altéré, changé ou modifié.

## Revendications

1. Procédé de fabrication de verres antiaveuglants et leur système de fixation, caractérisés par le fait qu'après la sélection des vitres ou glaces à traiter et leur nettoyage absolu préalable, celles-ci reçoivent, sur une de leurs faces ou sur toutes deux, une couche de solution formés par de l'oxyde métallique dilué dans de l'huile sérigraphique.

2. Procédé de fabrication de verres antiaveuglants et leur système de fixation selon la revendication qui précède, caractérisés par le fait que les pièces sont soumises à un processus de vitrification de la solution appliquée au moyen d'un traitement à haute température en les faisant passer par un four électrique à une température oscillant de 500 à 600 degrés centigrades.

3. Procédé de fabrication de verres antiaveuglants et leur système de fixation selon les revendications qui précèdent, caractérisés, en outre, par le fait que, immédiatement après, on place une feuille plastique en polyvinyle de butiral transparent, fabriquée par MONSANTO sous la marque SAFLESE-PUB, entre les pièces qui sont introduites dans une cloche à vide qui, à la température adéquate, réalise une union complète et totale de tous les éléments mentionnés.

4. Procédé de fabrication de verres antiaveuglants et leur système de fixation selon les revendications qui précèdent, caractérisés, en outre, par le fait qu'il a été prévu, dans la bague solidaire d'un côté du cadre de l'écran et en sa zone moyenne supérieure, une pièce prismatique, solidaire de ladite bague et pourvue d'un orifice vertical pour le passage de la tige sur laquelle pivote le cadre ainsi que d'un autre orifice à axe perpendiculaire par rapport au précédent et pourvu d'un logement tangentiel à section rectangulaire pour loger une pièce prismatique rectangulaire ayant une mortaise en forme de gorge qui s'appuie contre la tige servant de pivot à l'écran, alors que, dans l'orifice, s'introduit un axe présentant un cylindre excentrique au milieu et une poignée d'actionnement à l'extrémité supérieure, de sorte que, quand on fait tourner celle-ci, l'action de la pièce excentrique produit la libération ou la fixation du cadre dans la position souhaitée.

5. Procédé de fabrication de verres antiaveuglants et leur système de fixation selon les revendications qui précèdent, caractérisés, en outre, par le fait que, sur le côté opposé du cadre de l'écran et en sa zone supérieure, on a prévu une autre bague pour introduire une tige coudée permettant le pivotement vertical et coudée pour laisser une extrémité horizontale et libre afin de fournir un deuxième point d'appui à l'écran.
